# EUROPÄISCHE PATENTANMELDUNG

(11) **EP 1 469 040 A2**
(43) Veröffentlichungstag der Anmeldung: **20.10.2004**
(21) Anmeldenummer: 04004329.1
(22) Anmeldetag: 26.02.2004
(51) Int. Cl.: C09C 1/00

(54) **Interferenzpigmente mit einer lichtabsorbierenden Schicht**

(30) Priorität: 10.03.2003 DE 10310736
(71) Anmelder: MERCK PATENT GmbH, 64293 Darmstadt (DE)
(72) Erfinder: Rick, Norbert, 64291 Darmstadt (DE); Heider, Lilia, Dr., Winchester SO22 4HZ (GB); Loch, Manuela, 64572 Klein-Gerau (DE); Schupp, Nicole, 64401 Gross-Bieberau (DE); Anselman, Ralf, Dr., 67305 Ramsen (DE)

(57) **Zusammenfassung**

Die vorliegende Erfindung betrifft Interferenzpigmente mit Körperfarbe auf der Basis von mehrfach beschichteten plättchenförmigen Substraten, die sich dadurch auszeichnen, dass sie
(A) eine farblose Beschichtung mit einem Brechungsindex von n > 1,8 und einer Schichtdicke von 20 - 250 nm,
(B) eine farblose Beschichtung mit einem Brechungsindex von n ≤ 1,8 und einer Schichtdicke von 10 - 100 nm,
(C) eine farblose Beschichtung mit einem Brechungsindex von n > 1,8 und einer Schichtdicke von 20 - 250 nm,
(D) eine absorbierende Schicht mit einer Schichtdicke von 1 - 100 nm, und
   optional
(E) eine äußere Schutzschicht
enthalten,
sowie deren Verwendung in Farben, Lacken, Druckfarben, Kunststoffen, keramischen Materialien, Gläsern, zur Lasermarkierung, in kosmetischen Formulierungen und zur Herstellung von Pigmentpräparationen und Trockenpräparaten.

## Beschreibung

Die vorliegende Erfindung betrifft Interferenzpigmente mit Körperfarbe auf der Basis von mehrfach beschichteten plättchenförmigen Substraten.

Glanz- oder Effektpigmente werden in vielen Bereichen der Technik eingesetzt, insbesondere im Bereich der Autolacke, der dekorativen Beschichtung, im Kunststoff, in Farben, Druckfarben sowie in kosmetischen Formulierungen.

Glanzpigmente auf Basis transparenter plättchenförmiger Substrate, die keinen "harten" metallischen Glanz aufweisen, sind Gegenstand der WO 93/12182. Glimmerplättchen werden mit einer hochbrechenden Metalloxidschicht, wie z.B. TiO₂, und einer nicht selektiv absorbierenden Schicht belegt. Diese Pigmente zeigen in Abhängigkeit von der TiO₂-Schichtdicke in der Aufsicht eine bestimmte Interferenzfarbe, die mit schräger werdendem Blickwinkel zunehmend schwächer wird und schließlich nach grau bzw. schwarz abkippt. Die Interferenzfarbe ändert sich nicht, aber es ist eine Abnahme der Farbsättigung festzustellen.

In der JP 1992/93206 werden Glanzpigmente auf Basis von Glasplättchen bzw. Glimmerpartikeln beansprucht, die mit einer opaken Metallschicht und altemierenden SiO₂- und TiO₂-Schichten belegt sind.

Aus der EP 0 753 545 B1 sind goniochromatische Glanzpigmente auf Basis von mehrfach beschichteten, hochbrechenden, für sichtbares Licht zumindest teilweise durchlässigen, nichtmetallischen, plättchenförmigen Substraten bekannt, die mindestens ein Schichtpaket aus einer farblosen niedrigbrechenden und einer reflektierenden, selektiv oder nicht selektiv absorbierenden Beschichtung aufweisen.

Die aus dem Stand der Technik bekannten Mehrschichtpigmente sind teilweise aus nicht oder wenig lichtdurchlässigen Schichtmaterialien aufgebaut und daher in der Anwendung nur sehr beschränkt mit Absorptionspigmenten zu kombinieren. Die Interferenzfarbe dieser Pigmente ist darüber hinaus sehr stark vom Betrachtungswinkel abhängig, was in der Mehrzahl der Anwendungen nicht erwünscht ist. Weiterhin sind diese Pigmente zum Teil sehr schwer herstellbar bzw. reproduzierbar.

Aufgabe der vorliegenden Erfindung ist es farbige Pigmente mit einer hohen Farbstärke zur Verfügung zu stellen, die keine Goniochromatizität besitzen, sich durch ihre vorteilhaften Anwendungseigenschaften auszeichnen und gleichzeitig auf einfache Art und Weise hergestellt werden können.

Überraschenderweise wurden nun farbige Pigmente auf Basis von mehrfach beschichteten plättchenförmigen Substraten gefunden, die eine bestimmte Anordnung optisch funktioneller Schichten und eine dünne äußere absorbierende Schicht, vorzugsweise Metalloxidschicht, aufweisen, wodurch besondere Farbeffekte erzielt werden. Auf dem Substrat oder einem Substratgemisch wird eine Absorptionsschicht auf einem Interferenzschichtsystem erzeugt. Diese zeigt im Glanzwinkel eine Interferenzfarbe und zusätzlich außerhalb des Glanzwinkels eine Farbe, die sich aus der Interferenzfarbe und der Absorptionsfarbe der absorbierenden Schicht zusammensetzt. Diese Kombination aus Absorption und Interferenz ergibt ein finales farbiges Interferenzpigment mit hohem Glanz und außergewöhnlichen Farbeffekten.

Effektpigmente mit farbigen Pigmentpartikeln auf der äußeren Schicht sind beispielsweise aus der DE-PS-23 13 332 und DE-PS-33 34 596 bekannt. Die dort beschriebenen Pigmente basieren auf plättchenförmigen Substraten, die mit einer Metalloxidschicht beschichtet sind und nachfolgend mit Berliner Blau belegt sind. Bei den Pigmenten aus dem Stand der Technik handelt es sich aber nicht um Mehrschichtpigmente. Die erfindungsgemäßen farbigen Mehrschichtpigmente zeichnen sich gegenüber den Pigmenten aus dem Stand der Technik durch ihre intensive Körperfarbe und hohe Farbkraft aus, die durch die Absorption des Oxidsystems der äußeren Schicht in Kombination mit einem Interferenzsystem bestehend aus drei Schichten definiert wird. Weiterhin zeichnen sich die erfindungsgemäßen Pigmente durch ein hohes Deckvermögen, ihre hohe Farbreinheit der Interferenzfarbe und eine sehr starke Brillanz aus und weisen im Gegensatz zu den goniochromatischen Pigmenten aus dem Stand der Technik, wie z. B. EP 0 753 545 B1 keine Winkelabhängigkeit der Interferenzfarbe auf.

Gegenstand der Erfindung sind somit Interferenzpigmente mit Körperfarbe auf der Basis von mehrfach beschichteten plättchenförmigen Substraten, dadurch gekennzeichnet, dass sie
(A) eine farblose Beschichtung mit einem Brechungsindex von n > 1,8 und einer Schichtdicke von 20 - 250 nm,
(B) eine farblose Beschichtung mit einem Brechungsindex von n ≤ 1,8 und einer Schichtdicke von 10 - 100 nm,
(C) eine farblose Beschichtung mit einem Brechungsindex von n > 1,8 und einer Schichtdicke von 20 - 250 nm,
(D) eine absorbierende Schicht mit einer Schichtdicke von 1 - 100 nm
   optional
(E) eine äußere Schutzschicht
enthalten.

Gegenstand der Erfindung ist weiterhin die Verwendung der erfindungsgemäßen Interferenzpigmente in Farben, Lacken, Druckfarben, Kunststoffen, keramischen Materialien, Gläsern und zur Lasermarkierung. Aufgrund der hohen Farbkraft sind die erfindungsgemäßen Interferenzpigmente insbesondere für die dekorative Kosmetik geeignet. Weiterhin sind die erfindungsgemäßen Pigmente auch zur Herstellung von Pigmentpräparationen sowie zur Herstellung von Trockenpräparaten, wie z.B. Granulaten, Chips, Pellets, Briketts, etc., geeignet. Die Trockenpräparate sind insbesondere für Druckfarben und Lacke geeignet.

Geeignete Basissubstrate für die erfindungsgemäßen farbigen Pigmente sind transparente plättchenförmige Substrate. Bevorzugte Substrate sind Schichtsilikate. Insbesondere geeignet sind natürlicher und/oder synthetischer Glimmer, Talkum, Kaolin, plättchenförmige Eisen- oder Aluminium-Oxide, Glas-, SiO₂-, TiO₂-, Graphitplättchen, synthetische trägerfreie Plättchen, BiOCl oder andere vergleichbare Materialien. Es können auch Gemische unterschiedlicher Substrate oder Gemische gleicher Substrate mit unterschiedlichen Partikelgrößen eingesetzt werden. Die Substrate können in jedem Verhältnis miteinander gemischt werden. Vorzugsweise werden 10:1 bis 1:10-Gemische eingesetzt, insbesondere 1:1-Gemische. Besonders bevorzugt sind Substratgemische bestehend aus Glimmerplättchen mit unterschiedlichen Partikelgrößen, insbesondere Gemische aus N-Glimmer (10-60 µm) und F-Glimmer (< 25 µm).

Die Größe der Basissubstrate ist an sich nicht kritisch und kann auf den jeweiligen Anwendungszweck abgestimmt werden. In der Regel haben die plättchenförmigen Substrate eine Dicke zwischen 0,05 und 5 µm, insbesondere zwischen 0,1 und 4,5 µm. Die Ausdehnung in den beiden anderen Bereichen beträgt üblicherweise zwischen 1 und 250 µm, vorzugsweise zwischen 2 und 200 µm, und insbesondere zwischen 5 und 60 µm. Die Dicke der einzelnen Schichten auf dem Basissubstrat ist wesentlich für die optischen Eigenschaften des Pigments. Insbesondere die Schicht (B) beeinflusst wesentlich die Farbeigenschaften. Die Schicht (B) sollte gegenüber den Schichten (A) und (C) vergleichsweise dünn sein. Vorzugsweise ist das Verhältnis der Schichtdicke (A) bzw. (C) zu (B) 2 : 1 bis 5 : 1. Bei Schichtdicken (B) kleiner 100 nm nimmt die Abhängigkeit des Bunttonwinkels vom Betrachtungswinkel in der Weise ab, dass man nur die Interferenzfarbe des erfindungsgemäßen Pigments sieht, d.h. man beobachtet keinen winkelabhängigen Farbwechsel zwischen mehreren intensiven Interferenzfarben. Durch die Absorptionsschicht (D) wird diese Interferenzfarbe intensiviert.

Für ein Pigment mit hoher Farbkraft muss die Dicke der einzelnen Schichten genau aufeinander eingestellt werden.

Die erfindungsgemäßen Interferenzpigmente weisen alternierend eine hochbrechende Schicht (A) bzw. (C) und eine niedrigbrechende Schicht (B) auf. Die hochbrechenden Schichten (A) und (C) besitzen einen Brechungsindex von n > 1,8, vorzugsweise von n ≥ 2,0.

Die Schichten (A) und (C) bestehen vorzugsweise aus TiO₂, ZrO₂, SnO₂, ZnO, BiOCl, bzw. Gemische oder Kombinationen davon. Die Schichten (A) und (C) können gleich oder verschieden sein. Besonders bevorzugt handelt es sich bei den Schichten (A) und (C) um farblose Schichten, insbesondere um TiO₂-Schichten. Das TiO₂ kann dabei in der Rutil- und in der Anatasmodifikation vorliegen, vorzugsweise handelt es sich um Rutil.

Die Dicke der Schichten (A) und (C) betragen 20 bis 250 nm, vorzugsweise 20 bis 200 nm und insbesondere 25 bis 180 nm.

Als farblose niedrigbrechende für die Beschichtung (B) geeignete Materialien sind vorzugsweise Metalloxide bzw. die entsprechenden Oxidhydrate, wie z.B. SiO₂, Al₂O₃, AIO(OH), B₂O₃, MgF₂, MgSiO₃ oder ein Gemisch der genannten Metalloxide, geeignet. Vorzugsweise besteht die Schicht (B) aus SiO₂, MgF₂ oder Al₂O₃ oder deren Gemischen.

Für die optischen Eigenschaften der erfindungsgemäßen Pigmente ist es von Vorteil, wenn die Schicht (B) sehr dünn ist. Die Dicke der Schicht (B) beträgt 10 bis 100 nm, vorzugsweise 10 bis 90 nm und insbesondere 20 bis 80 nm.

Bei der Schicht (D) handelt es sich um eine dünne Schicht mit Schichtdicken von 1 bis 100 nm, vorzugsweise 1 bis 50 nm, insbesondere 5 bis 20 nm. Vorzugsweise handelt es sich bei der Schicht (D) um farbige Oxide, insbesondere Metalloxide einschließlich Mischoxide, Sulfide, Telluride, Selenide, Lanthanide, Actinide und/oder deren Gemische.

Besonders bevorzugt besteht die Schicht (D) aus Metalloxiden, wie z. B., Fe₂O₃, Fe₃O₄, Cr₂O₃, Ce₂O₃, Molybdänoxiden, CoO, CO₃O₄, VO₂, V₂O₃, NiO, V₂O₅, CuO, Cu₂O, Ag₂O, CeO₂, MnO₂, Mn₂O₃, Mn₂O₅, Titanoxynitride sowie Titannitrid, MoS₂, WS₂ bzw. Gemische oder Kombinationen davon.

Die Schicht (D) besteht insbesondere aus Fe₂O₃ oder Fe₃O₄.

Durch die Beschichtung der Substrate mit einer hochbrechenden Schicht (A), einer niedrigbrechenden Schicht (B), einer weiteren farblosen hochbrechenden Schicht (C) und einer absorbierenden Schicht (D) entstehen farbige Pigmente, deren Farbe, Glanz, Deckvermögen in weiten Grenzen variiert werden können.

Besonders bevorzugte Farbpigmente weisen folgende Schichtenfolgen auf:

Substrat + TiO₂ (A) + SiO₂ (B) + TiO₂ (C) + Fe₂O₃ (D)

Substrat + TiO₂ (A) + SiO₂ (B) + TiO₂ (C) + Fe₃O₄ (D)

Substrat + TiO₂ (A) + SiO₂ (B) + TiO₂ (C) + Cr₂O₃ (D)

Substrat + TiO₂ (A) + SiO₂ (B) + TiO₂ (C) + Ce₂O₃ (D)

Substrat + TiO₂ (A) + SiO₂ (B) + TiO₂ (C) + V₂O₅ (D)

Substrat + TiO₂ (A) + SiO₂ (B) + TiO₂ (C) + MnO₂ (D)

Substrat + TiO₂ (A) + SiO₂ (B) + TiO₂ (C) + CoO (D)

Substrat + TiO₂ (A) + SiO₂ (B) + TiO₂ (C) + Ag₂O (D)

Substrat + TiO₂ (A) + Al₂O₃ (B) + TiO₂ (C) + Fe₂O₃ (D)

Substrat + TiO₂ (A) + Al₂O₃ (B) + TiO₂ (C) + Fe₃O₄ (D)

Substrat + TiO₂ (A) + Al₂O₃ (B) + TiO₂ (C) + Cr₂O₃ (D)

Substrat + TiO₂ (A) + Al₂O₃ (B) + TiO₂ (C) + Ce₂O₃ (D)

Substrat + TiO₂ (A) + Al₂O₃ (B) + TiO₂ (C) + V₂O₅ D)

Substrat + TiO₂ (A) + Al₂O₃ (B) + TiO₂ (C) + MnO₂ D)

Substrat + TiO₂ (A) + Al₂O₃ (B) + TiO₂ (C) + CoO (D)

Substrat + TiO₂ (A) + Al₂O₃ (B) + TiO₂ (C) + Ag₂O (D)

Substrat + TiO₂ (A) + B₂O₃ (B) + TiO₂ (C) + Fe₂O₃ (D)

Substrat + TiO₂ (A) + B₂O₃ (B) + TiO₂ (C) + Fe₃O₄ (D)

Substrat + TiO₂ (A) + B₂O₃ (B) + TiO₂ (C) + Cr₂O₃ (D)

Substrat + TiO₂ (A) + B₂O₃ (B) + TiO₂ (C) + Ce₂O₃ (D)

Substrat + TiO₂ (A) + B₂O₃ (B) + TiO₂ (C) + V₂O₅ (D)

Substrat + TiO₂ (A) + B₂O₃ (B) + TiO₂ (C) + MnO₂ (D)

Substrat + TiO₂ (A) + B₂O₃ (B) + TiO₂ (C)+CoO (D)

Substrat + TiO₂ (A) + B₂O₃ (B) + TiO₂ (C) + Ag₂O (D)

Die erfindungsgemäßen Pigmente lassen sich relativ leicht herstellen durch die Erzeugung hoch- und niedrigbrechender Interferenzschichten mit genau definierter Dicke und glatter Oberfläche auf den feinteiligen, plättchen-förmigen Substraten.

Die Metalloxidschichten werden vorzugsweise nasschemisch aufgebracht, wobei die zur Herstellung von Perlglanzpigmenten entwickelten nasschemischen Beschichtungsverfahren angewendet werden können. Derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen.

Bei der Nassbeschichtung werden die Substratpartikel in Wasser suspendiert und mit einem oder mehreren hydrolysierbaren Metallsalzen bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base oder Säure konstant gehalten. Anschließend werden die Pigmente abgetrennt, gewaschen und getrocknet und gegebenenfalls geglüht, wobei die Glühtemperatur in Hinblick auf die jeweils vorliegende Beschichtung optimiert werden kann. In der Regel liegen die Glühtemperaturen zwischen 250 und 1000 °C, vorzugsweise zwischen 350 und 900 °C. Falls gewünscht können die Pigmente nach Aufbringen einzelner Beschichtungen abgetrennt, getrocknet und ggf. geglüht werden, um dann zur Auffällung der weiteren Schichten wieder resuspendiert zu werden.

Weiterhin kann die Beschichtung auch in einem Wirbelbettreaktor durch Gasphasenbeschichtung erfolgen, wobei z.B. die in EP 0 045 851 und EP 0 106 235 zur Herstellung von Perlglanzpigmenten vorgeschlagenen Verfahren entsprechend angewendet werden können.

Die Herstellung von Ti-Suboxid- oder Fe₃O₄-Schichten kann z.B. erfolgen durch Reduktion der TiO₂-Schicht mit Ammoniak, Wasserstoff sowie auch Kohlenwasserstoffen und Kohlenwasserstoff/Ammoniak-Gemischen wie z.B. beschrieben in EP-A- 0 332 071, DE 199 51 696 A1 und DE 199 51 697 A1. Vorzugsweise findet die Reduktion in einer Formiergasatmosphäre (92 % N₂ / 8 % H₂ oder 96 % N₂ / 4 % H₂) statt. Die Reduktion erfolgt in der Regel bei Temperaturen von 250-1000 °C, vorzugsweise 350-900 °C und insbesondere 500-850 °C.

Der Farbton der Pigmente kann in weiten Grenzen durch unterschiedliche Wahl der Belegungsmengen bzw. der daraus resultierenden Schichten variiert werden. Die Feinabstimmung für einen bestimmten Farbton kann über die reine Mengenwahl hinaus durch visuell oder messtechnisch kontrolliertes Anfahren der gewünschten Farbe erreicht werden.

Zur Erhöhung der Licht-, Wasser- und Wetterstabilität empfiehlt es sich häufig in Abhängigkeit vom Einsatzgebiet, das fertige Pigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017, DE-A 33 34 598, DE 40 30 727 A1, EP 0 649 886 A2, WO 97/29059, WO 99/57204, U.S. 5,759,255 beschriebenen Verfahren in Frage. Durch diese Nachbeschichtung (Schicht E) wird die chemische Stabilität der Pigmente weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendungsmedien können funktionelle Beschichtungen aus Al₂O₃ oder ZrO₂ oder deren Gemische bzw. Mischphasen auf die Pigmentoberfläche aufgebracht werden. Weiterhin sind organische bzw. organisch/anorganisch kombinierte Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjeé, Philips Technical Review, Vol. 44, No. 3, 81 ff. und P.H. Harding J.C. Berg, J. Adhesion Sci. Technol. Vol. 11 No. 4, S. 471-493.

Die erfindungsgemäßen Pigmente sind mit einer Vielzahl von Farbsystemen kompatibel vorzugsweise aus dem Bereich der Lacke, Farben und Druckfarben. Für die Herstellung der Druckfarben ist eine Vielzahl von Bindern, insbesondere wasserlösliche Typen, geeignet, wie sie z.B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die Pigmente auch für die Lasermarkierung von Papier und Kunststoffen, sowie für Anwendungen im Agrarbereich, z.B. für Gewächshausfolien, sowie z.B. für die Farbgebung von Zeltplanen, geeignet.

Es versteht sich von selbst, dass für die verschiedenen Anwendungszwecke die Mehrschichtpigmente auch vorteilhaft in Abmischung mit organischen Farbstoffen, organischen Pigmenten oder anderen Pigmenten, wie z.B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers) und herkömmlichen transparenten, bunten und schwarzen Glanzpigmenten auf der Basis von metalloxidbeschichteten Glimmer- und SiO₂-Plättchen, etc., verwendet werden können. Die Mehrschichtpigmente können in jedem Verhältnis mit handelsüblichen Pigmenten und Füllern gemischt werden.

Die erfindungsgemäßen Pigmente sind weiterhin geeignet zur Herstellung von fließfähigen Pigmentpräparationen und Trockenpräparaten. Die Pigmentpräparationen und Trockenpräparate zeichnen sich dadurch aus, dass sie ein oder mehrere erfindungsgemäße Pigmente, Bindemittel und optional ein oder mehrere Additive enthalten.

Gegenstand der Erfindung ist somit auch die Verwendung der Pigmente in Formulierungen wie Farben, Druckfarben, Lacken, Kunststoffen, keramischen Materialien, Gläsern, in kosmetischen Formulierungen, zur Lasermarkierung und zur Herstellung von Pigmentpräparationen und Trockenpräparaten.

### Beispiele

### Beispiel 1

### Schritt 1.1

100 g Glimmer der Teilchengröße 10-60 µm werden in 1,9 l VE-Wasser suspendiert und unter starkem Rühren auf 75 °C erhitzt. Zu dieser Suspension werden bei pH = 2,2 750 ml TiCl₄-Lösung (400 g TiCl₄/l) zudosiert. Danach wird der pH-Wert mit Natronlauge (32 %) auf 7,5 eingestellt und bei diesem pH-Wert werden 290 ml Natronwasserglaslösung (13,5 % SiO₂) zudosiert. Der pH-Wert wird dabei mit Salzsäure (18 %) konstant gehalten. Anschließend werden bei pH 2,2 750 ml TiCl₄-Lösung (400 g TiCl₄/l) zudosiert. Der pH-Wert wird bei der Zugabe der TiCl₄-Lösung jeweils mit NaOH-Lösung (32 %) konstant gehalten.

Zur Aufarbeitung wird das Interferenz-Grün-Pigment abfiltriert, mit VE-Wasser gewaschen, bei 110 °C getrocknet und 30 min bei 800 °C geglüht.

### Schritt 1.2 (Belegung mit Fe₃O₄)

100 g Interferenz-Grün-Pigment aus Schritt 1.1 werden in 1,9 I VE-Wasser suspendiert und unter Rühren auf 80 °C erhitzt. Der pH-Wert der Pigmentsuspension wird mit 10%-iger Salzsäure auf pH 2,8 eingestellt. Anschließend werden 51 g Eisen(III)chloridlösung (15 %ige Lösung) zudosiert, wobei der pH-Wert mit 32%-iger Natronlauge konstant gehalten wird. Die Suspension wird anschließend 15 Minuten gerührt. Zur Aufarbeitung wird das Pigment abfiltriert, mit VE-Wasser gewaschen, bei 110°C getrocknet und 30 Minuten bei 575 °C in einer Formiergasatmosphäre (92% N₂/8% H₂ oder 96% N2 /4% H₂) reduziert.

Man erhält ein grünfarbenes Pigment mit folgenden Lab-Werten (gemessen mit Minolta-Farbmessgerät CR-300):

| | |
|---|---|
| L-Wert: | 62 ± 1 |
| a-Wert: | -17 ± 1 |
| b-Wert: | 20 ± 2 |
| C-Wert (Farbstärke) | 27 ± 2 |
| h°-Wert (Bunttonwinkel): | 131 ± 1 |

### Beispiel 2

### Schritt 2.1

100 g Glimmer der Teilchengröße 10-60 µm werden in 1,9 I VE-Wasser suspendiert und unter starkem Rühren auf 75 °C erhitzt. Zu dieser Suspension werden bei pH = 2,2 420 ml TiCl₄-Lösung (400 g TiCl₄/l) zudosiert. Danach wird der pH-Wert mit Natronlauge (32 %) auf 7,5 eingestellt und bei diesem pH-Wert werden 212 ml Natronwasserglaslösung (13,5 % SiO₂) zudosiert. Der pH-Wert wird dabei mit Salzsäure (18 %) konstant gehalten. Anschließend werden bei pH 2,2 420 ml TiCl₄-Lösung (400 g TiCl₄/l) zudosiert. Der pH-Wert wird bei der Zugabe der TiCl₄-Lösung jeweils mit NaOH-Lösung (32 %) konstant gehalten.

Zur Aufarbeitung wird das Interferenz-Gold-Pigment abfiltriert, mit VE-Wasser gewaschen, bei 110 °C getrocknet und 30 min bei 800 °C geglüht.

### Schritt 2.2

100 g Glimmer der Teilchengröße 5 - 20 µm werden in 1,9 l VE-Wasser suspendiert und unter starkem Rühren auf 75 °C erhitzt. Zu dieser Suspension werden bei pH = 2,0 ca. 800 ml TiCl₄-Lösung (400 g TiCl₄/l) zudosiert. Danach wird der pH-Wert mit Natronlauge (32 %) auf pH 7 eingestellt und ca. 30 Minuten nachgerührt.

Zur Aufarbeitung wird das Interferenz-Gold-Pigment abfiltriert, mit VE-Wasser gewaschen, bei 110 °C getrocknet und 30 min bei 800 °C geglüht.

### Schritt 2.3

Ein Gemisch aus 100 g beschichtetes Glimmerpigment aus Schritt 2.1 und 100 g beschichtetes Glimmerpigment aus Schritt 2.2 werden in 3800 ml VE-Wasser enthaltend 200 g Nacl auf 80 °C temperiert. Nach Erreichen der Reaktionstemperatur wird durch tropfenweise Zugabe von Salzsäure (w = 10 %) der pH-Wert auf 2,8 eingestellt.

Anschließend wird eine FeCl₃-Lösung (28 g 15 %ige FeCl₃-Lösung und 56 g H₂O) zudosiert, wobei der pH-Wert mit 32 %iger Natronlauge auf pH = 2,8 konstant gehalten wird. Anschließend wird 0,5 h bei 80 °C gerührt und danach wird der pH-Wert mit 32 %iger Natronlauge auf pH = 7,0 eingestellt. Man rührt weitere 0,5 h, filtriert das gelbe Pigment ab, wäscht mit Wasser salzfrei, trocknet 12 h bei 110 °C und siebt das Pigment (Maschenweite 0,3 mm). Zuletzt wird das Pigment bei 800 °C geglüht.

Man erhält ein goldfarbenes Pigment mit folgenden Lab-Werten (gemessen mit Minolta-Farbmessgerät CR-300):

| | |
|---|---|
| L-Wert: | 82 ± 1 |
| a-Wert: | 4 ± 1 |
| b-Wert: | 38 ± 2 |
| C-Wert (Farbstärke) | 38 ± 2 |
| h°-Wert (Bunttonwinkel): | 85 ± 1 |

### Beispiel 3

### Schritt 3.1

100 g Glimmer der Teilchengröße 10-60 µm werden in 1,9 l VE-Wasser suspendiert und unter starkem Rühren auf 75 °C erhitzt. Zu dieser Suspension werden 676 ml TiCl₄-Lösung (400 g TiCl₄/l) bei pH = 2,2 zudosiert. Danach wird der pH-Wert mit Natronlauge (32 %) auf 7,5 eingestellt und bei diesem pH-Wert werden 209 ml Natronwasserglaslösung (13,5 % SiO₂) zudosiert. Der pH-Wert wird dabei mit Salzsäure (18 %) konstant gehalten. Anschließend werden 676 ml TiCl₄-Lösung (400 g TiCl₄/l) bei pH 2,2 zudosiert. Der pH-Wert wird bei der Zugabe der TiCl₄-Lösung jeweils mit NaOH-Lösung (32 %) konstant gehalten.

Zur Aufarbeitung wird das Interferenz-Blau-Pigment abfiltriert, mit VE-Wasser gewaschen, bei 110 °C getrocknet und 30 min bei 800 °C geglüht.

### Schritt 3.2 (Belegung mit Fe₃O₄)

100 g Interferenz-Blau-Pigment aus Schritt 3.1 werden in 1,9 I VE-Wasser suspendiert und unter Rühren auf 80 °C erhitzt. Der pH-Wert der Pigmentsuspension wird mit 10 %iger Salzsäure auf pH 2,8 eingestellt. Anschließend werden 47 g Eisen(III)chloridlösung (15 %ige Lösung) zudosiert, wobei der pH-Wert mit 32 %iger Natronlauge konstant gehalten wird. Die Suspension wird anschließend 15 Minuten gerührt. Zur Aufarbeitung wird das Pigment abfiltriert, mit VE-Wasser gewaschen, bei 110 °C getrocknet und 30 Minuten bei 575 °C in einer Formiergasatmosphäre (92 % N₂ / 8 % H₂ oder 96 % N2 / 4 % H₂) reduziert.

Man erhält ein blaufarbenes Pigment mit folgenden Lab-Werten (gemessen mit Minolta-Farbmessgerät CR-300):

| | |
|---|---|
| L-Wert: | 49 ± 1 |
| a-Wert: | 1,2 ± 1 |
| b-Wert: | -20 ± 2 |
| C-Wert (Farbstärke) | 20 ± 2 |
| h°-Wert (Bunttonwinkel): | 273 ± 1 |

### Beispiel 4

### Schritt 4.1

130 g Glimmer der Teilchengröße 10-60 µm werden in 2,5 l VE-Wasser suspendiert und unter starkem Rühren auf 75 °C erhitzt. Zu dieser Suspension werden bei pH = 2,2 879 ml TiCl₄-Lösung (400 g TiCl₄/l) zudosiert. Danach wird der pH-Wert mit Natronlauge (32 %) auf 7,5 eingestellt und bei diesem pH-Wert werden 272 ml Natronwasserlösung (13,5 % SiO₂) zudosiert. Der pH-Wert wird dabei mit Salzsäure (18 %) konstant gehalten. Anschließend werden bei pH 2,2 879 ml TiCl₄-Lösung (400 g TiCl₄/l) zudosiert. Der pH-Wert wird bei der Zugabe der TiCl₄-Lösung jeweils mit NaOH-Lösung (32 %) konstant gehalten.

Der pH-Wert der Pigmentsuspension wird mit 32 %iger Natronlauge auf pH 2,8 eingestellt. Anschließend werden 80 g Eisen(III)chloridlösung zudosiert, wobei der pH-Wert mit 32 %iger Natronlauge konstant gehalten wird. Die Suspension wird anschließend 15 Minuten gerührt. Anschließend wird der pH-Wert von 2,8 mit 32 %iger Natronlauge auf pH 5,0 eingestellt. Zur Aufarbeitung wird das Pigment abfiltriert, mit VE-Wasser gewaschen, bei 110 °C getrocknet.

### Schritt 4.1.1

Das getrocknete Pigment wird 30 Minuten bei 575 °C in einer Formiergasatmosphäre (92 % N₂ / 8 % H₂ oder 96 % N₂ / 4 % H₂) reduziert.

Man erhält ein blaufarbenes Pigment mit folgenden Lab-Werten (gemessen mit Minolta-Farbmessgerät CR-300):

| | |
|---|---|
| L-Wert: | 55 ± 1 |
| a-Wert: | - 2 ± 1 |
| b-Wert: | - 22 ± 2 |
| C-Wert (Farbstärke) | 22 ± 2 |
| h°-Wert (Bunttonwinkel): | 265 ± 1 |

### Schritt 4.1.2

Das getrocknete Pigment wird 30 Minuten bei 800 °C geglüht und dann 30 Minuten bei 575 °C in einer Formiergasatmosphäre (92 % N₂ / 8 % H₂ oder 96 % N₂ / 4 % H₂) reduziert.

Man erhält ein farbstarkes, blaufarbenes Pigment mit folgenden Lab-Werten (gemessen mit Minolta-Farbmessgerät CR-300):

| | |
|---|---|
| L-Wert: | 52 ± 1 |
| a-Wert: | 0,6 ± 1 |
| b-Wert: | - 27 ± 2 |
| C-Wert (Farbstärke) | 27 ± 2 |
| h°-Wert (Bunttonwinkel): | 271 ± 1 |

### Anwendungsbeispiele

### Beispiel A: Nagellack

| | |
|---|---|
| 2,00 % | Pigment aus Beispiel 3 |
| 98,00 % | Thixotrope Nagellack-Base 1348 (Toluene, Ethyl acetate, Butyl acetate, Nitrocellulose, Tosylamide/Formaldehyde, Resin, Dibutyl phthalate, Isopropyl Alcohol, Stearalkonium hectorite, Camphor, Acrylates Copolymer, Benzophenone-1 (2) |

### Bezugsquellen:

(1) Merck KGaA
(2) International Lacquers S.A.

### Beispiel B: Lidschatten

| Phase A | |
|---|---|
| 30,00 % | Pigment aus Beispiel 3 |
| 49,50 % | Talc (1 ) |
| 7,50 % | Potato Starch (Solanum Tuberosum) (2) |
| 2,50 % | Magnesium Stearate (1 ) |
| | |

| Phase B | |
|---|---|
| 9,14 % | Isopropyl stearate (3) |
| 0,53 % | Cetyl palmitate (1) |
| 0,53 % | Ewalin 1751 (Petrolatum) (4) |
| 0,20 % | Fragrance Elegance # 79228 D MF (Parfum) (5) |
| 0,10 % | Propyl-4-hydroxybenzoate (Propylparaben) (1) |

Die Bestandteile der Phase A werden homogen gemischt. Anschließend wird die Pudermischung unter Rühren mit der geschmolzenen Phase B versetzt. Die Puder werden bei 40-50 bar gepresst.

### Bezugsquellen:

(1) Merck KGaA
(2) Südstärke GmbH
(3) Cognis GmbH
(4) H. Erhard Wagner GmbH
(5) Haarmann & Reimer GmbH

### Beispiel C: Lippenstift

| Phase A | |
|---|---|
| 15,00 % | Pigment aus Beispiel 1 |
| | |

| Phase B | |
|---|---|
| 8,75 % | Beeswax white (Cera alba) (1) |
| 5,25 % | Paracera C 44 (Copemicia Cerifera (Carnauba wax, Ceresin) (2) |
| 3,50 % | Adeps Lanae (Lanolin) (3) |
| 5,60 % | Isopropyl myristate (4) |
| 2,10 % | Paraffin viscous (Paraffinum Liquidum (Mineral Oil) (1) |
| 0,05 % | OXYNEX® Kliquid (PEG-8, Tocopherol, Ascorbyl palmitate, Ascorbic acid, Citric acid) (1) |
| 0,10 % | Propyl-4-hydroxybenzoate (Propylparaben) (1) |
| 59,45 % | Castor Oil (Ricinus Communis) (3) |
| | |

| Phase C | |
|---|---|
| 0,20 % | Fragrance Tendresse # 75418C (Parfum) (5) |

Die Bestandteile der Phase B werden auf 75 °C erhitzt und aufgeschmolzen. Die Pigmente der Phase A werden zugegeben und alles wird gut durchrührt. Die Lippenstiftmasse wird dann in der auf 65 °C temperierten Gießapparatur mit dem Parfüm aus Phase C 15 Minuten gerührt. Die homogene Schmelze wird in die auf 55 °C vorgewärmten Gießformen gegossen. Anschließend kühlt man die Formen ab und entfernt die Gießlinge kalt.

### Bezugsquellen:

(1 ) Merck KGaA
(2) Paramelt
(3) Henry Lamotte GmbH
(4) Cognis GmbH
(5) Haarmann & Reimer GmbH

### Beispiel D: Klares Duschqel

| Phase A | |
|---|---|
| 0,10 % | Pigment aus Beispiel 1 |
| 0,75 % | Keltrol T (Xanthan Gum) (2) |
| 65,15 % | Wasser (Aqua) |
| | |

| Phase B | |
|---|---|
| 20,00 % | Plantacare 2000 UP (Decyl Glucoside) (3) |
| 3,60 % | Texapon ASV (Magnesium Oleth Sulfate, Sodium Oleth Sulfate, Magnesium Laureth-8 Sulfate, Sodium Laureth-8 Sulfate, Magnesium Laureth Sulfate, Sodium Laureth Sulfate (3) |
| 0,20 % | Brondidox L (Propylene Glydol, 5-Bromo-5-Nitro-1,3-Dioxane (3) |
| 0,05 % | Fragrance Everest 79658 SB (Parfum) (4) |
| q.s. % | Dye stuff solution |
| | |

| Phase C | |
|---|---|
| 0,15 % | Citric acid monohydrate (Citric acid) (1) |
| 10,00 % | Wasser, demineralisiert (Aqua) |

Das Pigment wird in das Wasser der Phase A dispergiert. Zugabe von Keltrol T und sorgfältiges Mischen der Bestandteile. Die Phase B und die Phase C werden unter Rühren zur Phase A gegeben. Man rührt langsam bis sich das homogene Gel gebildet hat. Der pH-Wert wird auf 6,0-6,5 eingestellt.

### Bezugsquellen:

(1) Merck KGaA
(2) Kelco
(3) Cognis GmbH
(4) Haarmann & Reimer GmbH

### Beispiel E: Lidschattenqel

| Phase A | |
|---|---|
| 17,00 % | Pigment aus Beispiel 3 |
| 6,00 % | Ronasphere® (Silica) (1) |
| 72,00 % | Wasser, demineralisiert (Aqua) |
| | |

| Phase B | |
|---|---|
| 2,00 % | Keltrol SF (Xanthan Gum) (1) |
| | |

| Phase C | |
|---|---|
| 2,00 % | Glycerine, anhydrous (Glycerin) (1) |
| 1,00 % | Phenochem (Phenoxyethanol, Methylparaben, Ethylparaben, Propylparaben, Butylparaben, Isobutylparaben) (3) |

Die Bestandteile von Phase A werden gemischt. Lansam Zugabe von Phase B und Rühren bis eine homogene Lösung vorliegt. Lösen der Bestandteile von Phase C und Rühren bis eine homogene Lösung vorliegt. Unter Rühren Zugabe von Phase C zur Phase A und B und Einstellung des pH-Werts auf 6,0-7,0.

### Bezugsquellen:

(1) Merck KGaA / Rona®
(2) Kelco
(3) Sharon Labs

### Beispiel F: Wimperntusche

| Phase A | |
|---|---|
| 15,00 % | Pigment aus Beispiel 3 |
| | |

| Phase B | |
|---|---|
| 8,00 % | Stearic acid (Stearic acid) (1) |
| 6,00 % | Beeswax white (Cera Alba) (1) |
| 4,00 % | Carn auba Wax 2442 L (Copernicia Cerifera) (2) |
| 3,00 % | Eutanol G (Octyldodecanol) (3) |
| 2,00 % | Arlacel 83 (Sorbitan Sesquioleate) (4) |
| 0,10 % | Propyl-4-hydroxybenzoate (Propylparaben) (1) |
| 0,50 % | RonaCare^{TM} Tocopherol acetate (Tocopheryl Acetate) (1) |
| | |

| Phase C | |
|---|---|
| 2,30 % | Triethanolamine (1) |
| 8,00 % | Wasser Soluble Shellac SSB 63 (Shellac) (5) |
| 0,25 % | Methyl-4-hydroxybenzoate (Methylparaben) (1) |
| 0,01 % | RonaCare™ Biotin (Biotin) (1) |
| 50,84 % | Wasser, demineralisiert (Aqua) |

Die Bestandteile der Phase B werden auf 80 °C erhitzt und unter Rühren geschmolzen. Shellac von Phase C wird mit Wasser gemischt, auf 75 °C erhitzt und gelöst in den weiteren Bestandteilen von Phase C. Phase C wird bei 75 °C zu dem Gemisch aus Phase A und Phase B zugegeben und für 2 Minuten homogenisiert. Die Wimperntusche wird auf Raumtemperatur abgekühlt und auf pH 7,0-7,5 eingestellt.

### Bezugsquellen:

(1) Merck KGaA / Rona®
(2) Kahl & Co.
(3) Cognis GmbH
(4) Uniqema
(5) Paroxite Ltd.

### Beispiel G: Kunststoff

Den Kunststoffgranulaten Polypropylen PP Stamylan PPH10 (Fa. DSM) bzw. Polystyrol 143E (Fa. BASF) werden jeweils
a) 1 % Pigment aus Beispiel 1
b) 1 % Pigment aus Beispiel 2
c) 1 % Pigment aus Beispiel 3
d) 1 % Pigment aus Beispiel 3 und 0,1 % PV-Echtblau B2G01 (Pigment Blue 15,3)

### zugeben.

Das pigmentierte Granulat wird anschließend auf einer Spritzmaschine zu Stufenplättchen verarbeitet.

Bei Verwendung der erfindungsgemäßen Pigmente wird ein farbiger Kunststoff mit einer intensiven Farbe erhalten.

### Beispiel H: Druckfarbe

Das Pigment wurde bei 600 Upm in das lösemittelhaltige Bindemittel eingerührt und die Druckfarben wurden anschließend auf Schwarz-Weiß-Karten aufgerakelt.

| Farbe Nr. 1: | |
|---|---|
| 88,0 g | Gebr. Schmidt 95 MB 011 TW |
| 10,0 g | Pigment aus Beispiel 4 |
| 2,0 g | Gebr. Schmidt 95 MB 022-TW (Grün) |
| | |

| Farbe Nr. 2: | |
|---|---|
| 88,0 g | Gebr. Schmidt 95 MB 011 TW |
| 10,0 g | Pigment aus Beispiel 1 |
| 2,0 g | Gebr. Schmidt 95 MB 022-TW (Grün) |

### Beispiel I: Autolack

| | |
|---|---|
| 2,00 g | Pigment aus Beispiel 3 |
| 1,50 g | Heliogenblau L 6930 |
| 0,20 g | Hostapermgrün 8G |
| 0,05 g | Farbruß FW 200 |
| 66,60 g | Basislack (A4) MP-System (FK = 19 %) |
| 29,65 g | Verdünnermischung |

## Patentansprüche

1. Interferenzpigmente mit Körperfarbe auf der Basis von mehrfach beschichteten plättchenförmigen Substraten **dadurch gekennzeichnet, dass** sie
(A) eine farblose Beschichtung mit einem Brechungsindex von n > 1,8 und einer Schichtdicke von 20 - 250 nm,
(B) eine farblose Beschichtung mit einem Brechungsindex von n ≤ 1,8 und einer Schichtdicke von 10 - 100 nm,
(C) eine farblose Beschichtung mit einem Brechungsindex von n > 1,8 und einer Schichtdicke von 20 - 250 nm,
(D) eine absorbierende Schicht mit einer Schichtdicke von 1 - 100 nm
optional
(E) eine äußere Schutzschicht
enthalten.

2. Interferenzpigmente nach Anspruch 1, **dadurch gekennzeichnet, dass** es sich bei den plättchenförmigen Substraten um natürlichen oder synthetischen Glimmer, Glas-, Al₂O₃-, SiO₂- oder TiO₂-Plättchen oder deren Gemische handelt.

3. Interferenzpigmente nach Anspruch 1 oder 2, **dadurch gekennzeichnet, dass** die Schicht (A) aus TiO₂, ZrO₂, ZnO oder BiOCl besteht.

4. Interferenzpigmente nach einem der Ansprüche 1 bis 3, **dadurch gekennzeichnet, dass** die Schicht (B) aus SiO₂, MgF₂, B₂O₃, AIO(OH), MgSiO₃ oder Al₂O₃ oder deren Gemischen besteht.

5. Interferenzpigmente nach einem der Ansprüche 1 bis 4, **dadurch gekennzeichnet, dass** es sich bei der absorbierenden Schicht (D) um Metalloxide, Sulfide, Telluride, Selenide, Lanthanide, Phosphate, Actinide und deren Gemische handelt.

6. Interferenzpigmente nach Anspruch 5, **dadurch gekennzeichnet, dass** die absorbierende Schicht (D) aus Fe₂O₃, Fe₃O₄, Cr₂O₃, Ce₂O₃, Cr₂O₃, Molybdänoxiden, CoO, Co₃O₄, VO₂, V₂O₃, NiO, V₂O₅, CuO, Cu₂O, Ag₂O, CeO₂, MnO₂, Mn₂O₃, Mn₂O₅, MoS₂, WS₂, Titanoxynitride sowie Titannitrid bzw. Gemische oder Kombinationen davon besteht.

7. Interferenzpigmente nach einem der Ansprüche 1 bis 6, **dadurch gekennzeichnet, dass** die Schicht (A) und die Schicht (C) dieselbe Zusammensetzung haben.

8. Interferenzpigmente nach Anspruch 7, **dadurch gekennzeichnet, dass** die Schicht (A) und die Schicht (C) aus TiO₂ bestehen.

9. Verfahren zur Herstellung der Interferenzpigmente nach Anspruch 1, **dadurch gekennzeichnet, dass** die Beschichtung der plättchen-förmigen Substrate nasschemisch durch hydrolytische Zersetzung von Metallsalzen in wässrigem Medium oder durch CVD- oder PVD-Verfahren erfolgt.

10. Verwendung der farbigen Interferenzpigmente nach Anspruch 1 in Farben, Lacken, Druckfarben, Kunststoffen, keramischen Materialien, Gläsern, in kosmetischen Formulierungen, zur Lasermarkierung und zur Herstellung von Pigmentpräparationen und Trockenpräparaten.

11. Pigmentpräparationen enthaltend ein oder mehrere Bindemittel, optional ein oder mehrere Additive und ein oder mehrere Interferenzpigmente gemäß Anspruch 1.

12. Trockenpräparate wie Pellets, Granulate, Chips, Briketts enthaltend Interferenzpigmente nach Anspruch 1.
